# EUROPEAN PATENT APPLICATION

(11) **EP 4 084 442 A1**
(43) Date of publication of application: **02.11.2022**
(21) Application number: 22171023.9
(22) Date of filing: 29.04.2022
(51) Int. Cl.: H04L 65/401, H04L 65/403, H04L 67/06

(54) **CONFERENCE SYSTEM CONTENT SHARING**

(30) Priority: 29.04.2021 US 202163181931 P; 12.08.2021 US 202117401288
(71) Applicant: Plantronics, Inc., Santa Cruz, California 95060 (US)
(72) Inventor: GROVER, Jonathan, Santa Cruz, 95060 (US)
(74) Representative: Optimus Patents Limited

(57) **Abstract**

One or more embodiments relate to a computer implemented method that includes extracting file attribute values for multiple files on a conferencing endpoint, and extracting, from a conferencing application, conference attribute values. Responsive to a trigger of a file share via the conferencing application and during a conference call, the computer implemented method further includes selecting a matching file from the multiple files by applying a matching algorithm to the conference attribute values and the file attribute values, and presenting, during the conference call, recommended content including the matching file.

## Description

### CROSS REFERENCE TO RELATED APPLICATIONS

This application is a non-provisional application of, and thereby claims benefit under 35 U.S.C. § 119 to U.S. Patent Application Serial Number 63/181,931 filed on April 29, 2021. U.S. Patent Application Serial Number 63/181,931 is incorporated by reference in its entirety.

### FIELD OF INVENTION

The present invention generally relates to conferencing systems.

### BACKGROUND

Video conferencing solutions connect users at two or more sites (i.e., physical locations). Each site has a conferencing endpoint. The conferencing endpoint includes hardware and software that capture audio or video from the users at the site. For example, the conferencing endpoint may include one or more cameras, microphones, speakers, and display devices along with hardware and software to transmit and receive audio and video signals.

In a virtual conferencing system, users have an option of sharing content (e.g., a file or a screen). However, a user is presented with multiple different options for content to share. Some of the options on the user's screen may be private with respect to the parties to the conference. Namely, such content should not be shared in a conference call with the other users. For example, the content may be personal emails, confidential information, and other such content.

### SUMMARY

In general, in one aspect, one or more embodiments relate to a computer implemented method that includes extracting file attribute values for multiple files on a conferencing endpoint, and extracting, from a conferencing application, conference attribute values. Responsive to a trigger a file share via the conferencing application and during a conference call, the computer implemented method further includes selecting a matching file from the multiple files by applying a matching algorithm to the conference attribute values and the file attribute values, and presenting, during the conference call, recommended content including the matching file.

In general, in one aspect, one or more embodiments relate to a system that includes a file attribute extractor executing on a computer processor for extracting file attribute values for multiple files, and a conference attribute executing on the computer processor for extracting, from a conferencing application, conference attribute values. The system further includes a file selector executing on the computer processor for selecting, responsive to a trigger of a file share via the conferencing application and during a conference call, a matching file from the multiple files by applying a matching algorithm to the conference attribute values and the file attribute values, and presenting, responsive to the trigger and during the conference call, recommended content including the matching file.

In general, in one aspect, one or more embodiments relate to a non-transitory computer readable medium including computer readable program code for performing operations. The operations include extracting file attribute values for multiple files on a conferencing endpoint, and extracting, from a conferencing application, conference attribute values. Responsive to a trigger of a file share via the conferencing application and during a conference call, the operations further include selecting a matching file from the multiple files by applying a matching algorithm to the conference attribute values and the file attribute values, and presenting, during the conference call, recommended content including the matching file.

Other aspects will be apparent from the following description and the appended claims.

### BRIEF DESCRIPTION OF DRAWINGS

FIG. 1 shows a diagram of a conferencing system in accordance with one or more embodiments.
FIG. 2 shows a diagram of a conferencing endpoint in accordance with one or more embodiments.
FIG. 3 shows a diagram of a content sharing monitor in accordance with one or more embodiments.
FIG. 4 shows a flowchart in accordance with one or more embodiments.
FIG. 5 shows a flowchart in accordance with one or more embodiments.
FIG. 6 shows a flowchart in accordance with one or more embodiments.
FIG. 7 shows an example detailed flowchart in accordance with one or more embodiments.
FIG. 8 shows an example detailed flowchart in accordance with one or more embodiments.
FIG. 9 shows an example detailed flowchart in accordance with one or more embodiments.

### DETAILED DESCRIPTION

In general, embodiments of the technology are directed to a content sharing monitor for a conference center. The content sharing monitor addresses a technical problem of deciphering user intent for sharing content during a conference call while preserving privacy of the user's computer. The content sharing monitor monitors the files accessed on a conferencing endpoint and extracts a set of file attribute values for the files. The content sharing monitor also monitors conference calls and extracts a set of conference attribute values. The conference attribute values indicate information about the conference from which the user intent may be deciphered. By applying a matching algorithm to the file attribute values and the conference attribute values, the conference sharing monitor is able to determine recommended content. The conferencing application then presents the recommended content to a user.

From a user perspective, during a conference call, an end user may decide to start to share content (e.g., audio or visual content) through the conferencing application. When the user shares content, a conferencing application displays a menu of content to share. One or more embodiments present recommended content for a user. The recommended content may be a warning when the content selected does not match the recommended content, an indication in the user interface of recommended content, or another system. Thus, the possibility of the user presenting private or irrelevant content is reduced.

Specific embodiments are described below with reference to the accompanying figures. Like elements in the various figures are denoted by like reference numerals for consistency.

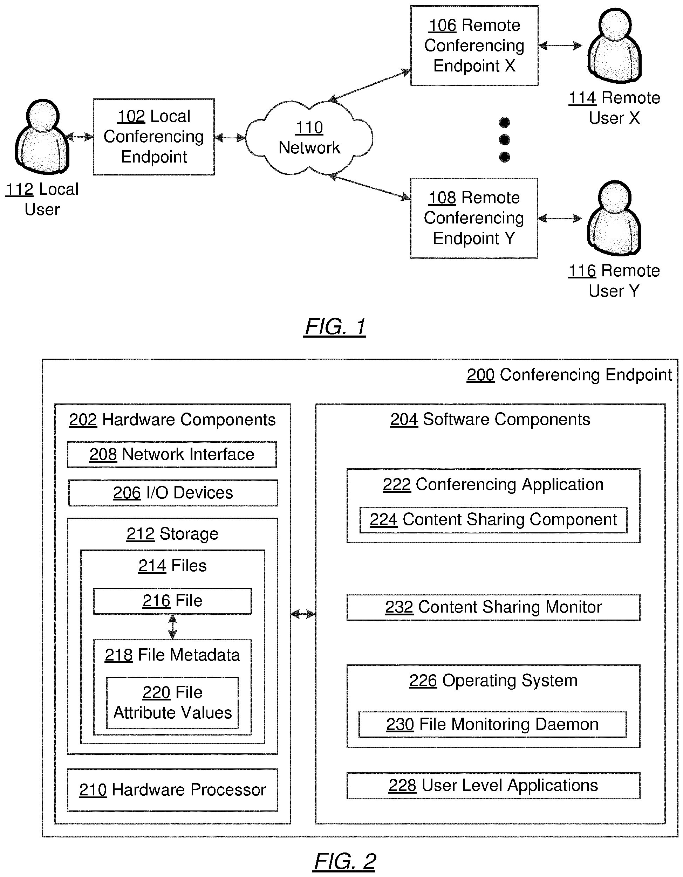

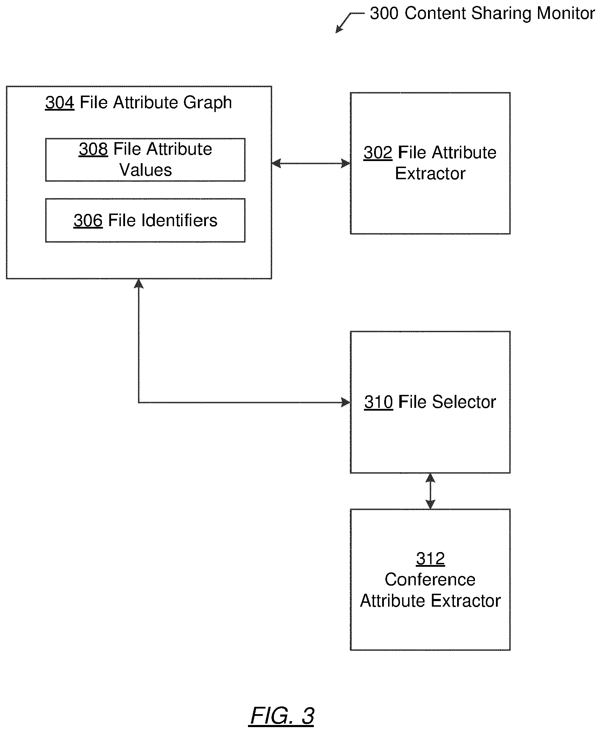

FIGs. 1-3 show system diagrams in accordance with one or more embodiments. FIG. 1 provides an overview of the conferencing system. FIG. 2 presents a conferencing endpoint having the file sharing monitor. FIG. 3 shows a diagram of the file sharing monitor.

FIG. 1 shows a diagram of a conferencing system in accordance with one or more embodiments. In general, a conferencing system is a set of hardware and software components that establish a conference call between users. A conference call complies with the standard definition as a real time connection between two or more users located at different sites (i.e., geographic locations). The conference call may be planned, impromptu, formal, or informal. Thus, a conference call may also be called a meeting. The conferencing system is the set of hardware or software that perform real-time connection between audio streams, video streams, or audio video streams. Users located at each site view or hear other users as the audio or video streams are received rather than a prerecording of the other users. Thus, the conferencing system provides a real-time connection between users.

The conferencing system includes endpoints (e.g., local conferencing endpoint (102), remote conferencing endpoint X (106), remote conferencing endpoint Y (108)) connected via a network (110). Each conferencing endpoint (e.g., local conferencing endpoint (102), remote conferencing endpoint X (106), remote conferencing endpoint Y (108)) plays the audio or video streams as the audio or video streams are being received and processes and transmits audio or video streams while the audio or video streams are being received.

With respect to a particular conferencing endpoint, the conferencing endpoint is a local conferencing endpoint (102) and the conferencing endpoints that the local conferencing endpoint (102) communicate with are referred to as remote conferencing endpoints (e.g., remote conferencing endpoint X (106), remote conferencing endpoint Y (108)). Each conferencing endpoint (e.g., local conferencing endpoint (102), remote conferencing endpoint X (106), remote conferencing endpoint Y (108)), whether remote or local, provides local conference call services to one or more users. A user is an individual that is a party to the conference call. With respect to a local conferencing endpoint (102), the user that is local to the conferencing endpoint is a local user. The local conferencing endpoint (102) is the endpoint initiating screen scare and the local user is the user selecting the contents to share. With respect to the local conferencing endpoint (102), remote users (e.g., remote user X (114), remote user Y (116)) are users that use the local conference call services of remote conferencing endpoints (e.g., remote conferencing endpoint X (106), remote conferencing endpoint Y (108)). Remote users (e.g., remote user X (114), remote user Y (116)) receive the user status for the target user (112).

Each conferencing endpoint (e.g., local conferencing endpoint (102), remote conferencing endpoint X (106), remote conferencing endpoint Y (108)) includes functionality to capture audio or video stream from one or more local users (e.g., target user (112)) or applications local to the conferencing endpoint and transmit the audio or video stream on the network (110).

The conferencing endpoint further includes functionality to receive one or more audio video streams from remote conferencing endpoints of the conferencing system via the network (110) and play an audio or video streams for the one or more local users (e.g., target user (112)) that are local to the conferencing endpoint. Likewise, the conferencing endpoint includes functionality to provide the user statuses of one or more remote users to local user(s).

FIG. 2 shows a schematic diagram of a conferencing endpoint (200) (e.g., local conferencing endpoint (102) shown in FIG. 1) in accordance with one or more embodiments. The conferencing endpoint (200) includes hardware components (202) and software components (204). A conferencing endpoint (200) is a type of electronic system that is configured to generate near-end audio and video and to receive far-end audio and video from the remote conferencing endpoints. The conferencing endpoint (200) is configured to transmit the near-end audio and video to the remote endpoints and to initiate local presentation of the far-end audio and video. The conferencing endpoint (200) can be a conferencing device, a videoconferencing device, a personal computing device with audio or video conferencing abilities, a smartphone, or any similar type of communication device, or any combination of devices. The conferencing endpoint (200) may further include dedicated hardware, a computing system, software executed by one or more processors, a hardware processor (210), or a combination thereof.

The hardware components (202) may also include storage (212). The storage (212) is any hardware device that stores data. The storage (212) may be accessible directly or indirectly, such as via a virtual storage interface. The storage (212) is configured to store files (214). Files are possible targets for a file share. In some embodiments, all files are possible targets. In other embodiments, only open files are possible targets of the file share. For each file (216), the storage may also store file metadata (218) in addition to the file body (not shown). Namely, the file body includes the file contents that are the information encoded in the file that is displayed (e.g., the possible content to display in a file share). File contents may be a dataset, a presentation, a document, or any other content within a file.

File metadata (218) stores information about the file (216). For example, file metadata (218) may store a unique file identifier, an author, size, filetype, and file name. File metadata (218) includes file attribute values (220). A file attribute value is a value of an attribute of the file. For example, the file attribute values (220) may include attributes of the content (e.g., whether tracked changes exist in the file, the topic of the file, a set of keywords extracted from the file, whether the file include comments, who has provided comments in the file, etc.). File attribute values may include versioning information (e.g., version number, version history, information about past versions, etc.) of the file. File attribute values may in collaboration information. The collaboration information describes a collaboration history on the file. For example, the collaboration history may be a list of users (e.g., by user role or user identity) to whom the file was transmitted (e.g., via email) or otherwise shared (e.g., via shared link or a past file share). Other examples of file attribute values and the extraction thereof is presented in the remaining portion of the disclosure.

Continuing with FIG. 2, the conferencing endpoint (200) executes software components (204). For example, the software components (204) include a conferencing application (222). A conferencing application (222) is a user level software tool that establishes and controls a conference call. The conferencing application (222) is a meeting application for online meetings.

The conferencing application (222) includes functionality to execute a content sharing component (224). The content sharing component (224) is a software component of the conferencing application that is configured to share content being presented on the local user's computing system with the remote conferencing endpoints. For example, the content may be audio content, visual content, or a combination thereof. Visual content is content having a visual element in the content itself or in a software application having a visual interface that plays audio content. The content sharing component (224) may be referred to as a "file share" component that shares all or a portion of content currently being presented on a local conferencing endpoint. The content being shared may be an entire display screen (e.g., the various applications being presented) or a portion of the display screen, such as a portion of single file being displayed, or at least a portion of audio being played. The content sharing component (224) is configured to share the content as an audio or video feed for display on the remote conferencing endpoints. The content includes both the portion of the file(s) being displayed (if the entirety of the document is not displayed) as well as user cursor navigation and other user interface operations on the file(s). Thus, remote users receive the same view of the content as the local user.

The software components (204) may include other user level applications (228), such as a calendaring program, an email application, a word processing application, simulation software, presentation software, or other type of application that is configured to generate a notification or otherwise interface with other components of the endpoint conferencing system. The other user level applications include functionality to display file contents and interact with the file. Such interactions may include, opening, editing, sending, receiving, creating, etc. the file.

To access the file in storage (212), the other user level applications (228) interact with the operating system (226). The term operating system (226) is the same as generally used in the art. For example, the operating system is the software that supports a computer's basic functions, such as scheduling tasks, executing applications, and controlling peripherals. In one or more embodiments, the operating system (226) includes a file monitoring daemon (230). The file monitoring daemon (230) tracks and logs operations on files (214). For example, each time the user opens or closes the file, the file monitoring daemon may log the opening or closing of the file. The file monitoring daemon (230) may further include functionality to log the sending and receiving and storage of files. Logging refers to storing a file identifier and an action identifier of the action in a log.

Continuing with FIG. 2, the content sharing monitor (232) is configured to provide recommendations for sharing content. Specifically, the content sharing monitor (232) includes functionality to extract file attribute value and conference attribute values and select content for sharing based on a comparison. The recommendation may be an indicator of the recommended content or a warning of user selected content when the user selected content fails to match the recommended content. The content sharing monitor (232) is further configured to self-modify based on user selected content in one or more embodiments.

In one or more embodiments, the content sharing monitor (232) may have different modes based on the access level provided to the content sharing monitor. For example, a first mode may be that the content sharing monitor has, directly or indirectly, prior access to the files (214) such that the file attribute values can be stored prior to the conference call. The files may be all files regardless of whether currently opened by a user. Indirect access may be, for example, through the file monitoring daemon whereas direct access may be if the content sharing monitor (232) includes a background process that performs screen scraping. In the first mode, the content sharing monitor (232) may be proactive. By being proactive, the recommendation includes recommended content and the recommendation is presented prior to user selection. In the first mode, the content sharing monitor (232) may also operate reactively. When reactive, the content sharing monitor (232) responds to user selection (e.g., prior, or after to the content being displayed) with a warning or alert when the user selected content fails to match the recommended content. Reactive operations may be performed, for example, when the processing is longer than the content sharing component (224) takes to display the possible content for selection.

The second mode of the content sharing monitor (232) is that the content sharing monitor (232) has, directly or indirectly, prior access to the files (214) similar to the first mode, but only operates reactively. Thus, the content sharing monitor (232) does not provide recommended content to the user. Rather, the content sharing monitor only warns the user.

In a third mode, the content sharing monitor (232) does not have access to the files prior to the conference call. For example, the content sharing monitor (232) may only have access to open files. In such a scenario, the content sharing monitor (232) may be reactive. Although only three modes are presented, the content sharing monitor may operate in other modes without departing from the scope of the disclosure.

The conferencing endpoint (200) may be configured to execute a content sharing monitor with each of the different modes, a subset of the different modes, or a single mode. For example, a same instance of the content sharing monitor may include functionality to operate in the various different modes, whereby the current mode being used is based on configuration parameters.

In FIG. 2, the content sharing monitor is shown as separate from the conferencing application or operating system. In such a scenario, in one or more embodiments, the content sharing monitor may be all or part standalone application that operates separately from conferencing application or operating system. The content sharing monitor may have, for example, a separate user interface than the conferencing application. However, other configurations may exist that are not shown. For example, the content sharing monitor may be a component of the conferencing application. As another example, the content sharing monitor may be a plugin to the conferencing application. As another example, the content sharing monitor may be a component of the operating system. The operations and configuration of the content sharing monitor is discussed in further detail in FIGs. 3-9.

FIG. 3 shows a component diagram of the content sharing monitor in one or more embodiments. As shown in FIG. 3, the content sharing monitor (300) may include a file attribute extractor (302) connected to a file attribute graph (304). The file attribute extractor (302) is configured to extract file attribute values from files. For example, the file attribute extractor (302) may be a screen scraper that is configured to monitor a user's actions on a display screen. As another example, the file attribute extractor (302) may be a software tool that interfaces with application programming interfaces (APIs) of user level applications. As another example, the file attribute extractor (302) may be the file monitoring daemon of FIG. 1.

The file attribute extractor (302) is configured to store extracted attribute values in the file attribute graph (304). A file attribute graph (304) is an organization of file identifiers (306) based on file attribute values (308) of the files. Different types of file attribute graphs may be used. One type of file attribute graph is an attribute tree. In the attribute tree, the file attribute graph has is hierarchical with multiple levels. Each level corresponds to a file attribute. Levels may be organized based on probability of the file attribute causing files to be more relevant to a conference call. For example, if version (e.g., most recent vs. past version) is deemed more relevant than collaborators, then the version level is higher in the attribute tree than the collaborator level. Each link in the attribute tree corresponds to a file attribute value. The leaf nodes correspond to file identifiers. Thus, a path may be traversed from the root to the leaf following a set of file attribute values. Each subtree corresponds to a set of files having the set of attribute values for a level.

Another type of attribute graph is a nonhierarchical general graph in which each node is for a file attribute value or a file identifier. A link exists between a file identifier node and a file attribute value node based on whether the file matching the file identifier has the particular file attribute value. Each individual attribute value node may be connected to multiple file identifier nodes. Namely, a link may exist from an attribute value node to each file identifier node of a file exhibiting the file attribute value. Thus, by selecting a file attribute value, the file identifiers of files having the file attribute value may be identified.

In some embodiments, links between file identifier nodes and file attribute value nodes may have a probability value. The probability value represents the likelihood that the file attribute value is correctly determined for the file identifier. For example, if the file attribute is topic of the file, and the file attribute value for a particular file is "Crustaceans," then the link include the probability that the file attribute extractor correctly identified "Crustaceans" as the topic of the particular file. Thus, in one or more embodiments, the file attribute graph may also maintain the degree of certainty of an extraction.

The file attribute graph is a type of data structure, or storage structure for data, that may be used to store file attribute values for files. Other types of data structures may be used without departing from the scope of the disclosure. Such other types of data structures include databases, indexes into the file system, tree structures based on files rather than file attributes, and other structures.

Continuing with FIG. 3, a conference attribute extractor (312) is configured to extract conference attribute values of conference attributes for a conference call. The conference attributes are attributes of a conference call. For example, conference attributes include static attributes and in-meeting attributes. Static attributes are attributes of the conference call that may be determined prior to the conference call, such as from a conference invite. For example, the static attributes include a date and time of the conference call, users invited to the conference call, roles of users invited to the conference call, whether users invited to the conference call are external or internal with respect to a project, department, or company of the local user, topic of the conference call, conference title (e.g., name) of the conference call, any descriptions or keywords determined from the descriptions, name and versions of files shared prior to the conference call (e.g., as part of the conference invite), and other such information. Many of the static attributes may be determined by parsing the conference invite.

The in-meeting attributes are attributes of the conference call that are determined at the time of the conference call. For example, in-meeting attributes may be the files that are shared (e.g., through file share, shared links, email, or another medium), keywords determined from shared files, participants attending the conference call, role of participants attending the conference call, whether the participants are internal or external to project, department, or company. Keywords and topics discussed via the audio of the conference, keywords and topics discussed via video stream or messages, etc.

The conference attribute extractor (312) may be a part of the conferencing application (222), a screen scraper, or a background daemon that logs user interactions, video, and audio streams. Further, in some embodiments, the conference attribute extractor may execute remotely of the conferencing endpoint, such as by being in a central computer that manages the conference call. In such a scenario, the conference attribute extractor may be configured to monitor the audio or video stream of the conference call.

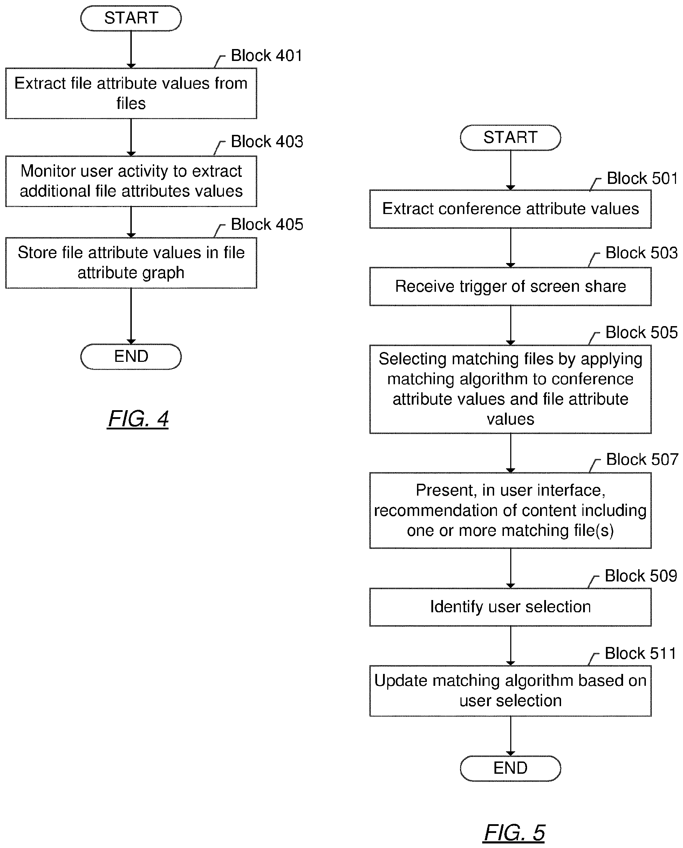

The conference attribute extractor (312) and the file attribute graph (304) are communicatively, directly, or indirectly, connected to a file selector (310). The file selector is configured to select a file for a conference call. Specifically, the file selector is configured to match the conference attribute values to the file attribute values to identify a recommended file. Details of file selection is presented below with reference to FIGs. 5-9.

Although FIGs. 1-3 shows certain components as being part of the conferencing endpoint (200), some components may be part of a different system as remote components. For example, at least a portion of the storage may optionally be remote storage. As another example, the conferencing application (222) or user level application may execute on a remote machine. In such a scenario, the user level applications (228) may be on a different component than the conferencing application (222). To the remote endpoints, the configuration of the local conferencing endpoint may be hidden. For example, the video stream transmitted by the conferencing endpoint (200) may display both local and remote executing applications of the conferencing endpoint. Each of the different possible configurations of the conferencing endpoint may be used without departing from the scope of the disclosure.

FIGs. 4-9 show flowcharts in accordance with one or more embodiments. In Block 401, file attribute values are extracted from the file in accordance with one or more embodiments. Different techniques are used to extract the file attribute values based on the type of attribute value and the level of access to the file. Below is a description of how some of the file attribute values may be extracted.

A first set of file attribute values may be extracted from the file metadata, such as by using file system level monitoring permissions. For example, the creation date, filename size, location, version number, author, modified date, and other file attributes may be determined from the file metadata. By identifying and tracking version number, one or more embodiments is able to know the latest version of the file. By identifying the last modified date, one or more embodiments may identify the most recently modified file even if it differs from the latest version of the file.

A second set of file attribute values may be inferred from the file metadata. For example, matching author to a list of user roles provides a user role of the author of the file. By way of another example, a file name includes a drive in which the file is located, a pathname (e.g., through a set of folders of the file system hierarchy), a base name, and a file extension. The key terms from the folder names in the pathname may be used to as a set of file attribute values. Further, the base name of the file may be parsed to identify additional file attribute values. For example, at least two file attribute values may be determined for some files including, for example, a user assigned version number, a user assigned descriptive name of the contents, and a status identifier of the file. The different portions of the base name may be extracted as individual attribute values for the file.

Another set of file attributes may be determined from the file contents. The file contents may be extracted as a keyword list or summary of the file. A natural language processor topic modeling machine learning model may be applied to the contents of the file to extract words for the file to use as a set of attribute values. As another example, using an image processing technique, one or more embodiments may process a file consisting of a series of images of giraffes to identifying the content as giraffes and zoo animals. If the file includes links, the links may be similarly processed to provide context to the file and extract another set of attribute values for the file.

Continuing with FIG. 4, in Block 403, user activity is monitored to extract additional file attribute values. The user activity is any action that is performed on the file based on user input. For example, user activity may be opening, closing, editing, saving, sending, etc. on the file or any portion of the file. The manner of monitoring user activity may be based on the level of access of the content sharing monitor. For example, screen scraping techniques may be used to actively monitor the content that is currently being displayed on the user's screen. The screen scraping results in a series of images. A vision recognition algorithm could be used to segment the image into the user-level applications that the user was using (e.g., to identify the windows on screen that corresponded to a word document). Thus, each user-level application is an image segment. The image segment may be processed through an optical character recognition (OCR) algorithm to transform the image into text. The text can then be processed using through various natural language understanding (NLU) and keyword spotting machine learning algorithms to perform labeling and extract semantic meaning. Additionally, the segmented image (from the screen scraping) can be run through additional vision recognition/labelling machine learning algorithms to identify and label any images shown on screen.

Additional file attribute values may be extracted by monitoring emails and other communications, and past conference calls to identify files. Email and communication monitoring may be performed using the screen scraping technique above or using file system permission or requesting the information via an API.

The various file attribute values may also or alternatively be extracted using direct integrations in target user-level applications. For example, by having an integration into an email application, the email communications may be monitored. Similarly, integration into word processing applications may be used to identify whether a particular word processing file has comments, edit and sharing history, etc.

Additionally, file attribute values of files may inherit properties from "older" versions of the file to newer version of the file. For example, John may have shared version 2 of the file with Jayne. When John creates version 3, even if version 3 has not been shared with Jayne, a file attribute value of version 3 may include that Jayne has received a previous version of the file. In the file attribute graph, the previous version may have a greater probability value for future sharing with Jayne because the previous version was previously shared whereas the newer version has not expressly been previously shared.

In Block 405, the file attributes are stored in the file attribute graph. As file attributes are extracted nodes and links are created in the file attribute graph to store the file attributes in the file attribute graph.

FIG. 5 shows a flowchart for matching file attribute values to files in one or more embodiments. In Block 501, conference attribute values are extracted. As noted above, static conference attribute values may be extracted prior to the meeting or as part of the meeting. For example, an integration in an email application may be used to extract static conference attribute values from a meeting invite. As another example, the conference attribute values may be extracted through continuous screen scraping monitoring. For example, at the start of the conference and through the user interface of the conferencing application or through the conference invite, one or more embodiments may identify the meeting title, and that a meeting is started through direct vision recognition of an image of the screen. Screen scraping may also be used to identify the names of each participant in view, on screen. As additional participants join the meeting, one or more embodiments may identify the additional participants when additional bubble/box are added to the conference application user interface, along with the person's name (shown on screen). The fixed attributes may be at the start of the meeting or prior to the conference call.

In meeting data may be determined from audio or video streams of the conference call. For the audio stream, one or more embodiments may obtain access to the audio stream using API Integration directly with the conference application that provides the audio stream with a third party application, which itself has the audio stream (e.g., a meeting assistant application that is a participant of the meeting), software or hardware integration to an audio device, or other technique. For example, through integration, the audio may be forked to the conference attribute extractor. Processing of the audio stream may be used to perform identification/separation (e.g., identify and separate a single audio stream into multiple audio streams, with each audio stream representing a single (identified0 speaker), automatic speech recognition/transcription to transform the audio stream into a text output that can be further processed, and perform NLU and keyword spotting algorithms in order to identify phrases, keywords, and semantic meaning of the statements of participants. The various items extracted, such as participants, statements of participants, keywords may be added as a set of conference attribute values.

Turning to the video stream, extracting the video stream may be performed through API Integration directly with the conference application, a third-party application, screen scraping, or hardware or software integration with the video device. To process the video stream, the following techniques may be used. Vision, object, and facial recognition algorithms may be used to identify, label and extract speakers, objects, text, and images. OCR may be used to transform the text shown on screen into text that is searchable. NLU and keyword spotting algorithms may be used to identify phrases, keywords, and semantic meaning within text content.

The method of extraction may be used to determine an accuracy probability for the extraction. For example, some machine learning models may output an accuracy probability as part of a classification output by the model. The accuracy probability of a conference attribute value may be increased if corroborated. For example, if an invitee to the conference call is also a conference call participant, then the accuracy probability of the participant being in the conference call is increased. As another example, if the topic is corroborated by the both the audio and video streams, then the accuracy probability of the topic is increased.

Continuing with FIG. 5, in Block 503, a trigger of a file share is received. The local user initiates an action to indicate that the local users want to share content. If one or more embodiments is integrated into the meeting solution this could be as simple as detected that the user has pressed the meeting share button in the conferencing application. As another example, the trigger may be detected through screen scraping, detection of a keyword/phrase, a selection of a button in a conference sharing monitor, etc.

In Block 505, a matching file is selected by applying a matching algorithm to the conference attribute values and the file attribute values. The matching algorithm compares the file attribute values to the conference address values. The file attribute values being compared may be all files accessible to the user regardless of whether opened, a subset of the files accessible to the user, or only the opened files. Different matching algorithms may be used. For example, one matching algorithm may rank conference attribute values based on accuracy probability and then apply the conference attribute values in order of the ranking to the file attribute values. The matching algorithm may apply a predefined ranking whereby the set of conference attribute values have a predefined order to which the predefined attribute values are applied to the file attribute values to identify matching files. For example, the ranking may be to match on file purpose/title to the conference purpose/title, match based on the version of the file, match based on the latest modification of the file, match based on the version of a file previously shared with the remote users, match based on the latest version of the file not having been previously shared, match based on the version being relevant to internal/external participants based on the participants to the meeting, etc. A combined matching algorithm may have some conference attribute values at the head of the ranking and the remaining portion of the ranking is defined by the accuracy probability. Another matching algorithm may, for each file, match the file attribute values with the conference attribute values. The number of matching attribute values and the accuracy probability of extracting the attribute values may be used to identify a match probability for the match. Based on the match probability, one or more matching files may be selected, such as the file with the highest match probability.

Depending on the matching algorithm, one or more matching files may be returned. The matching files may be associated with distinct matching probabilities.

In Block 507, a recommendation of content including one or more matching files is presented in the user interface. The content may be a single matching file or a file share. For example, if multiple matching files exist that are equally applicable to the meeting, appear on the same screen, and, optionally, other rules are validated (e.g., nothing else is on the same screen, no external participants, etc.), then an entire screen may be recommended as the content to share. If the recommended content includes multiple files that are ranked in recommendation, then the recommended content may be presented as a ranked list. Matching files in the ranked list may be presented in order of recommendation. Thus, the highest recommended matching file may be presented first while lower recommended matching files may be presented lower in the list. The ordering may be defined by the match probability, described below.

Different mechanisms may be used to present the recommendation. If the system is proactive, then the recommendation includes the recommended content. If the content sharing monitor is integrated into the conferencing application, the content sharing monitor may preselect the recommended content to share in the user interface. As another example, the content sharing monitor may display the recommended content in a separate window. For example, the content sharing monitor may display a message stating that the user should select a file having a particular file name. As another example, if the conferencing application only provides the user with options to select open files and the content sharing monitor identifies a closed file as being the recommended matching file, then the content sharing monitor may provide a message to the user indicating that the user should open and share the closed file. In such embodiments, the content sharing monitor is able to assist users who do not have all relevant files opened on their computer.

If the content sharing monitor is reactive, the content sharing monitor may compare a user's selection of content and display a warning message. For example, the warning message may be that the user is performing file share even though the user only has one file to share and the user's email is open in the background. The warning message may be displayed in the user interface of the conference application or the content sharing monitor. As another example, the warning message may be that the user is sharing one version of the file even though another version is recommended. Thus, even when the content sharing monitor operates reactively, the content sharing monitor may recommend to the user that a better version of the file exists to share.

In Block 509, a user selection is identified in one or more embodiments. In one or more embodiments, the user selects content to share via the user interface of the conferencing application. The content that the user selects is user selected content.

In Block 511, the matching algorithm is updated based on user selection. The user selected content is compared with the recommended content. If the user selected content does not match the recommended content, then the matching algorithm is automatically updated. For example, a different version of the matching algorithm may be used, different weights may be applied, or the matching algorithm may adjust the predefined ranking. For example, different orders may be applied to the conference attribute values in the predefined ranking. By way of an example, Block 505 may be performed, for the same conference and same files, by different matching algorithms. The matching files may be selected by selecting the output of one of the different matching algorithms. After receiving the user selected content, if mismatch is found, then the user selected content is compared against the output of the remaining matching algorithms. If one of the remaining matching algorithms is deemed more accurate, then the matching algorithm may be used for future recommendations. Thus, by comparing the recommended content to the user selected content and updating the ranking, the content sharing monitor updates the matching algorithm to be more accurate.

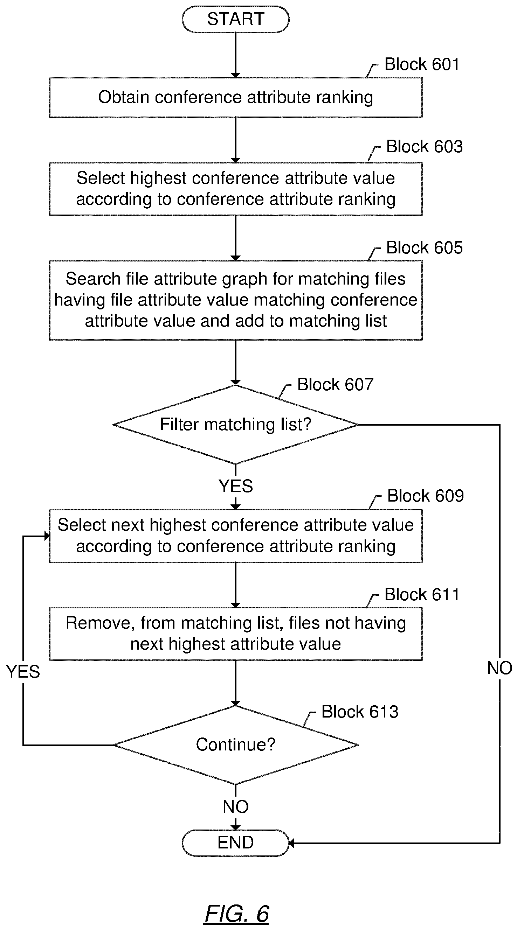

FIG. 6 shows a flowchart of executing a matching algorithm in one or more embodiments. In Block 601, conference attribute ranking is obtained. As discussed above, the conference attribute ranking may be predefined, defined based on accuracy probability, or a combination thereof. If predefined, then the conference attribute ranking is obtained from storage or other memory. If defined from accuracy probability, the accuracy probability of extracting each of the conference attribute values is obtained and ordered. The conference attribute value having the greatest accuracy is set as the highest conference attribute in the ranking. The combination may have that certain conference attributes are preselected as highest in the ranking and remaining conference attributes are ranked by accuracy probability.

In Block 603, the highest conference attribute value is selected according to the conference attribute ranking. In Block 605, the file attribute graph is searched for matching files having a file attribute value matching the conference attribute value to add the matching files to a matching list. As an initial matter, the matching may not be a direct match. For example, if the file attribute value indicates that the file has been shared with users X, Y, and Z, but users A, Y, and Z are attending the meeting, the file may still be deemed to match based on participants. Further, if the topic of the meeting is zoo animals and a file is labeled giraffes, the file may be deemed to match. As files are matched, a match probability may be determined for the match. The match probability may be based on the degree to which the file matches the conference attribute value. Thus, a file shared with the exact same participants may have a greater match probability than a file not shared with the exact same participants.

Searching the file attribute graph include traversing the file attribute graph to identify the one or more file attribute nodes having the conference attribute value. By traversing links to the file identifier nodes, the matching files may thus be identified. The result of Block 603 is a matching list having one or more matching files.

In Block 607, a determination is made whether to filter the matching list. The determination may be made to filter the matching list based on the number of matching files in the matching list. If only one matching file is found, then the matching file is recommended, and the process proceeds to end. If a determination is made to filter the matching list, the process proceeds to Block 609.

In Block 609, the next highest conference attribute value is selected according to the conference attribute ranking. In Block 611, files not having the next highest conference attribute value is removed from the matching list. The file attribute value of the file is compared against the conference attribute value. If the file attribute value does not match, then the file is removed from the matching list. If the file attribute value does match, then the file is kept in the file matching list. Determining whether the file attribute value matches the conference attribute value may be performed as discussed above. Further, the match probability may be updated, such as by using an average, summation, weighted average, etc., of the individual match probabilities of the matching individual file attribute values and conference attribute values.

At Block 613, a determination is made whether to continue filtering. Thus Blocks 609-613 may continue until an end condition is reached. The resulting matching list may be an ordered list of matching files that are ordered based on match probability.

The following is an example of a matching algorithm using ranking. In the example, a combination of the accuracy probability of extracting the attribute value and match probability of matching the file attribute value to the conference attribute value is used. In the example, the conference attribute values are: (1) meeting title is "Review IDF on Sharing Content Algorithms" (100% accuracy probability); (2) date of conference call is March 1, 2021 (100% accuracy probability); and (3) the participants are Sam Smith and Jane Jones based on the content stream monitor being integrated with the conferencing application. Because Sam Smith is confirmed via video, the accuracy probability of Sam Smith is set as 95%. However, because Jane Jones is not confirmed, the accuracy probability is 85% for Jane Jones. Continuing with the example, using the audio stream and keyword processing, "Noise Block" is an extracted from the audio stream and is assigned an accuracy probability of 80% based on being detected twenty times. Noise Block is assigned the labels of "technology", "acoustics", and "audio" using an additional database. "Noise Suppression" is extracted as a conference attribute value based on being detected 15 times and is assigned the accuracy probability of 75%. Additional labels of "acoustics", "audio", and "user experience" are added as additional conference attribute values. Furthermore, the phrase "vacuum cleaner" is detected five times, and is assigned the accuracy probability of 60%, with labels of "household", "cleaning", and "noise" added as conference attribute values.

When screen sharing is triggered, a progressive search across the files is performed. The high probability conference attribute values are searched first and then the lower conference attribute values.

Continuing with the example, based on a fuzzy match search of "Review IDF on Sharing Content Algorithms" the content file monitor identifies the following matched files in a match list: (A) Sharing Audio Algorithms - Review with Sam - March 1; (B) Sharing Audio Algorithms - Review with Sam - Feb 15; (C) Sharing Video Algorithms - Review with Jane - March 1; (D) Sharing Audio Algorithms - Review with Joe - March 1; (E) Sharing Video Algorithms - Review with Joe - Feb 10.

The match list is then filtered based on date to remove some of the matched files. The filtered match list has only (B) Sharing Audio Algorithms - Review with Sam - March 1; (C) Sharing Video Algorithms - Review with Jane - March 1; and (E) Sharing Audio Algorithms - Review with Joe - March 1.

Further filtering is performed based on the participants (both high accuracy probability at 95% and 85% for Sam and Jane respectively). The match list is now (B) Sharing Audio Algorithms - Review with Sam - March 1; and (C) Sharing Video Algorithms - Review with Jane - March 1. Because Sam has a higher accuracy probability, the match probability of (B) is greater than (C).

Based on extracted audio, the file "Sharing Audio Algorithms..." has multiple references to NoiseBlock and Noise Suppression, but none to vacuum cleaners. Thus, the recommended content has match file (B) "Sharing Audio Algorithms - Review with Sam - March 1".

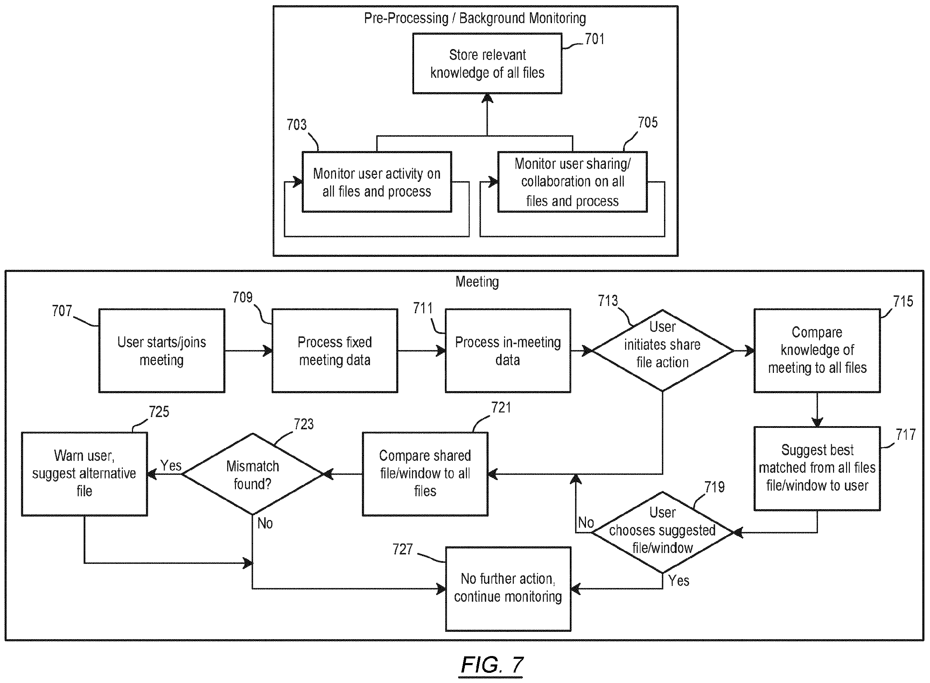

Turning now to the example flow diagrams, FIGs. 7-9 show examples of how one or more embodiments may be performed. Specifically, FIGs. 7-9 show how one or more embodiments may be implemented for a meeting. FIG. 7 shows an example of a proactive system in which all files on a user's conferencing endpoint may be selected. Blocks 701-705 are preprocessing/background monitoring blocks. At block 703, user activity on files and processes is monitored. User sharing collaboration on files and processes is monitored at block 705. At block 701, the output of blocks 703 and 705 are stored for the files.

Blocks 707-727 are operations that occur during the meeting. At block 707, a user starts or joins a meeting. At block 709, the content sharing monitor processes fixed or static meeting data to obtain a first set of conference attribute values. At block 711, the content sharing monitor processes in-meeting data to obtain a second set of conference attribute values. At block 713, a user initiation of a file sharing action is detected. At block 715, the conference attribute values from blocks 711 and 713 are compared against the file attribute values from block 701. At block 717, recommended content having a best match file is recommended in a window for the user. At block 719, a determination is made whether the user selected the recommended content. If the user selected content is the recommended content, the flow proceeds to block 727 to continue monitoring. If the user selected content does not match, the flow proceeds to block 721 to compare the user selected content with the files of the system and a determination is made whether a mismatch is found at block 723. If a mismatch is not found, the flow proceeds to block 727. If a mismatch is found, the flow proceeds to block 725 to warn the user and recommend an alternative file.

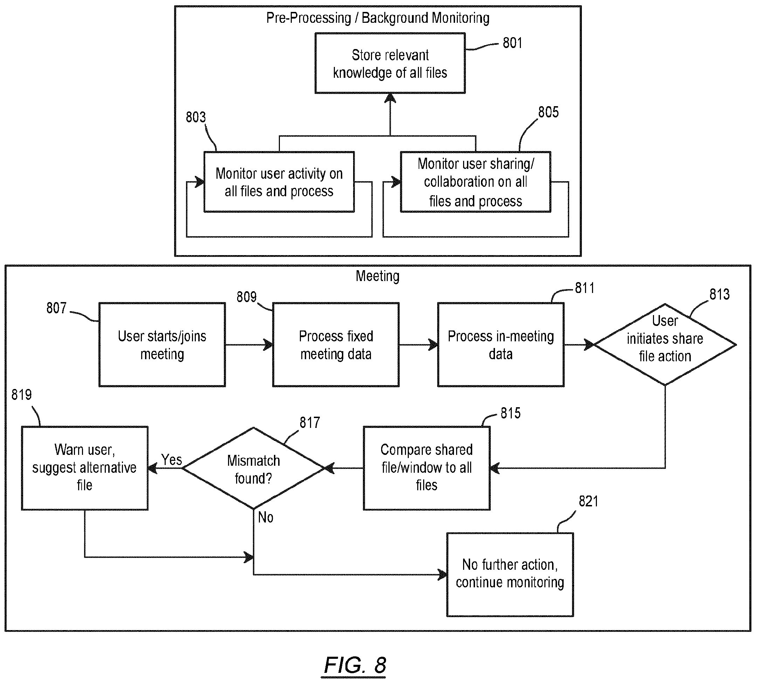

FIG. 8 shows a flow diagram for a reactive system in which the content sharing monitor has access to the various files and insufficient data to make a recommendation. Blocks 801-705 are preprocessing/background monitoring blocks. At block 803, user activity on files and processes is monitored. User sharing collaboration on files and processes is monitored at block 805. At block 801, the output of blocks 803 and 805 are stored for the files.

Blocks 807-821 are operations that occur during the meeting. At block 807, a user starts or joins a meeting. At block 809, the content sharing monitor processes fixed or static meeting data to obtain a first set of conference attribute values. At block 811, the content sharing monitor processes in-meeting data to obtain a second set of conference attribute values. At block 813, a user initiation of a file sharing action is detected. Because insufficient data exist, the user selects content without a proactive recommendation. At block 815, the user shared content is compared against the file attribute values stored at block 801. A determination is made whether the user selected content matches the file attribute values (e.g., whether a more recent version exists, or other property of the file is more likely) at block 817. If a mismatch is found at block 817, the flow proceeds to block 819 to warn the user and recommend an alternative file. If a mismatch is not found, the flow proceeds to block 821 to continue monitoring.

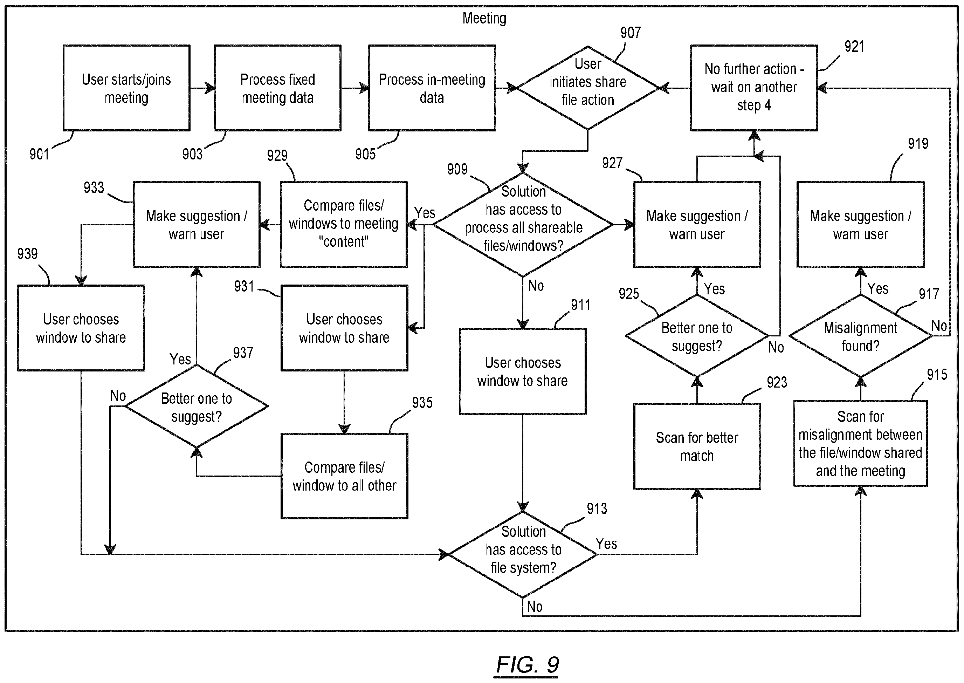

FIG. 9 shows a flowchart for when file attribute values are not extracted prior to the meeting. At block 901, a user starts or joins a meeting. At block 903, the content sharing monitor processes fixed or static meeting data to obtain a first set of conference attribute values. At block 905, the content sharing monitor processes in-meeting data to obtain a second set of conference attribute values. At block 907 user initiation of file sharing is detected. At block 909, a determination is made whether the content sharing monitor has access to view all of the available files/windows that the user can share. If the content sharing monitor does not have access, the flow proceeds to block 911.

At block 911, the user selects the file to share. The solution then branches at block 913 to make a determination whether the content sharing monitor has access to the user's file system. If the content sharing monitor does not have access, the flow proceeds to block 915.

At block 915, the content sharing monitor compares the file attribute values of the file being shared with the conference attribute values of the conference. Based on the level of integration the processing of the file could include full file processing (e.g., block 703 of FIG. 7) or only processing the file's title and the visual content shown on screen using screen scraping. After processing, the content sharing monitor compares the file attribute values to the conference attribute values and determines whether a misalignment between the file and the conference purpose was found. For example, if the meeting is titled "Financial Review of Headset Portfolio," and a file called "Pictures of Giraffes" that contains pictures of giraffes is shared, a misalignment is detected at block 917. If a misalignment or mismatch is detected at block 917, the flow proceeds to block 919, to make a suggestion or warn the user. The suggestion or warning may be in the form of visual prompts, overlays, or audio. After block 919 or if no misalignment in block 917 is detected, the solution proceeds to block 921. At block 921, no further action is performed until the user indicates intent to share new content.

Returning to block 913, consider the scenario in which the content sharing monitor has access to the user's file system. Then, the flow proceeds to block 923 to can for a better match. Namely, the shared file is processed in a manner similar to described above with reference to block 915. When processing the shared file, the content sharing monitor creates a match probability representing the degree to which the shared file matches the conference attribute values extracted at blocks 903 and 905. The content sharing monitor then scans the user's file system searching for a file that has a higher match probability than the file the user is sharing. The scan for a better file may be time limited (e.g., thirty seconds) by which the scan stops. The level of processing may be based on the timeout period. Thus, one or more embodiments may include logic that determines the level of processing of files, the priority of files compared, and the level of comparison to the data from blocks 901 and 903. For example, a quicker level of processing than a full file, would be to just look at a file name. In such a scenario, the match probability of the file being shared may be compared with other file similar names on the filesystem (e.g. Headset Projections v4). Similarly, one or more embodiments may limit the search to a same directory as the file being shared, again limiting the scope and time to find alternatives.

Continuing with FIG. 9, at block 925, a determination is made whether a better alternative found. If a better alternative is found, at block 927, a warning or notification is presented. If a better alternative is not found, the flow proceeds to block 921.

Returning to block 909, consider the case where the content sharing monitor has access to all the shareable files/windows from the meeting solution. There are two outputs at this stage, either the content sharing monitor has time to process and make a suggestion (flow to block 929), or the user selects content without waiting for a suggestion at block 931. If the flow proceeds to block 929, the content sharing monitor processes the files from all the shareable windows that are accessible using techniques applied above. Based on the implementation, the content sharing monitor may select the best of the files available or determine a rank order of possible files to present to the user. At block 933, the content sharing monitor makes a suggestion to the user.

At block 931, the user chooses which window to share, and then the flow proceeds to block 935. Block 935 may be performed similar to block 923. Similarly, a determination is made whether a better match is found from block 935. If a better match is found at block 937, the flow proceeds to block 933 to make a new suggestion or warn the user. If a better match is not found at block 937, the flow proceeds to block 913. If a suggestion is present to the user at block 933, the user may proceed with the user selected content or the recommended content at block 939.

While one or more embodiments are described with reference to a conference call, embodiments may be applied to any communication session regardless of whether the communication is or is not real time. For example, communication session may be a series of emails, a series of messages in a messaging application, or other set of communications between two or more users. In the general case, the conference attribute values are communication attribute values, and the conference application is a communication application. The same techniques described above may be performed to extract the communication attribute values and compare the communication attribute files with the file attribute values. Further, communications may have static attribute values from past communications in the communication session and in-meeting attribute values from the current communication. Thus, one or more embodiments are not limited to conference calls.

Software instructions in the form of computer readable program code to perform the one or more embodiments may be stored, in whole or in part, temporarily or permanently, on a non-transitory computer readable medium such as a CD, a DVD, a storage device, a diskette, a tape, flash memory, physical memory, or any other computer readable storage medium. Specifically, the software instructions may correspond to computer readable program code that, when executed by a processor(s), is configured to perform the one or more embodiments.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, the term "or" in the description is intended to be inclusive or exclusive. For example, "or" between multiple items in a list may be one or more of each item, only one of a single item, each item, or any combination of items in the list.

In the above detailed description, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description. Further, while the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A computer implemented method comprising:
extracting a plurality of file attribute values for a plurality of files;
extracting, from a conferencing application, a plurality of conference attribute values;
selecting, responsive to a trigger of a file share via the conferencing application and during a conference call, a first matching file from the plurality of files by applying a matching algorithm to the plurality of conference attribute values and the plurality of file attribute values; and
presenting, responsive to the trigger and during the conference call, recommended content comprising the first matching file.

2. The computer implemented method of claim 1, wherein extracting the plurality of file attribute values for a file of the plurality of files comprises one of:
parsing a base name of a file name of the file to identify at least two file attribute values of the file; and extracting file contents from a file body of the file to identify a third file attribute value of the file;
monitoring, by a background daemon, a user activity using the file to identify at least one file attribute value for the file;
monitoring a collaboration with a second user on the file to identify at least one file attribute value for the file.

3. The computer implemented method of claim 1, further comprising:
storing the plurality of file attribute values in an attribute graph.

4. The computer implemented method of claim 3, wherein
the attribute graph is an attribute tree,
the attribute tree comprises a plurality of levels,
each level is for an individual attribute of a plurality of attributes, and
storing the plurality of file attribute values in the attribute tree comprises adding a file at an end of a path of the attribute tree that matches the plurality of file attribute values of the file.

5. The computer implemented method of claim 1, wherein extracting the plurality of conference attribute values comprises screen scraping the user interface of the conferencing application during the conference call to detect one of:
a topic of the conference call as a conference attribute value of the plurality of conference attribute values;
at least one participant attending the conference call as a conference attribute value of the plurality of conference attribute values.

6. The computer implemented method of claim 1, wherein extracting the plurality of conference attribute values comprises:
extracting, from an invite to the conference call, a conference title and at least one participant of the conference call as conference attribute values of the plurality of conference attribute values.

7. The computer implemented method of claim 1, wherein presenting the recommended content is one of: performed after a user selects user selected content and wherein presenting the recommended content comprises displaying a warning message based on detecting that user selected content fails to match the recommended content, or comprises presenting a ranked list of matching files comprising the first matching file.

8. The computer implemented method of claim 1, wherein said applying the matching algorithm further comprises:
obtaining an accuracy probability of each of the plurality of conference attribute values when extracting the plurality of conference attribute values, the accuracy probability defining a level of extracting a corresponding conference attribute value of the plurality of conference attribute values;
obtaining, according to the accuracy probability, a conference attribute ranking of the plurality of conference attribute values;
selecting a highest conference attribute value according to the conference attribute ranking;
searching a data structure of the plurality of file attribute values to identify a matching list, the matching list comprising a subset of the plurality of files comprising a file attribute value matching the highest conference attribute value, the file attribute value being in the plurality of file attribute values;
repetitively filtering, until an end condition is reached and in an order defined by the conference attribute ranking, the matching list by the plurality of conference attribute values; and selecting, after repetitively filtering, the recommended content according to the ordering.

9. The computer implemented method of claim 1, wherein the matching algorithm comprises:
selecting a highest conference attribute value according to a predefined ranking;
searching a data structure of the plurality of file attribute values to identify a matching list, the matching list comprising a subset of the plurality of files comprising a file attribute value matching the highest conference attribute value, the file attribute value being in the plurality of file attribute values;
repetitively filtering, until an end condition is reached and in an order defined by the predefined ranking, the matching list by the plurality of conference attribute values; and
selecting, after repetitively filtering, the recommended content according to the ordering.

10. The computer implemented method of claim 9, further comprising:
detecting a selection of a user selected content;
determining that the user selected content fails to match the recommended content; and
adjusting one of:
an order of conference attributes in the predefined ranking based on the user selected content failing to match the recommended content;
the matching algorithm based on the user selected content failing to match the recommended content.

11. The computer implemented method of claim 10, further comprising:
obtaining first recommended content of a first version of the matching algorithm;
obtaining second recommended content of a second version of the matching algorithm; and
comparing the first recommended content with the second recommended content with the user selected content;
wherein adjusting the matching algorithm comprises:
switching from the first version to the second version based on the user selected content.

12. A system comprising:
a file attribute extractor configured to:
extract a plurality of file attribute values for a plurality of files;
a conference attribute configured to:
extract, from a conferencing application, a plurality of conference attribute values; and
a file selector configured to:
select, responsive to a trigger of a file share via the conferencing application and during a conference call, a first matching file from the plurality of files by applying a matching algorithm to the plurality of conference attribute values and the plurality of file attribute values, and
present, responsive to the trigger and during the conference call, recommended content comprising the first matching file.

13. The system of claim 12, further comprising:
a file monitoring daemon executing as a background process to extract at least a portion of the plurality of file attribute values.

14. The system of claim 12, further comprising:
a content sharing monitor comprising the file attribute extractor, the conference attribute extractor, and the file selector, wherein the content sharing monitor is a plugin to the conferencing application.

15. A non-transitory computer readable medium comprising computer readable program code for performing operations comprising:
extracting a plurality of file attribute values for a plurality of files;
extracting, from a conferencing application, a plurality of conference attribute values;
selecting, responsive to a trigger of a file share via the conferencing application and during a conference call, a first matching file from the plurality of files by applying a matching algorithm to the plurality of conference attribute values and the plurality of file attribute values; and
presenting, responsive to the trigger and during the conference call, recommended content comprising the first matching file.
